# EUROPÄISCHE PATENTSCHRIFT

(11) **EP 2 544 022 B1**
(45) Veröffentlichungstag und Bekanntmachung des Hinweises auf die Patenterteilung: **24.04.2019**
(21) Anmeldenummer: 12004896.2
(22) Anmeldetag: 02.07.2012
(51) Int. Cl.: G01S 13/90, G01S 7/03, G01S 7/285, G01S 7/40, G01S 13/02, H01Q 3/26

(54) **Radarsystem mit synthetischer Apertur**
Système de radar avec ouverture synthétique
Radar system with synthetic aperture

(30) Priorität: 07.07.2011 DE 102011107403
(43) Veröffentlichungstag der Anmeldung: 09.01.2013
(73) Patentinhaber: Airbus Defence and Space GmbH, 82024 Taufkirchen (DE)
(72) Erfinder: Schäfer, Christoph, Dr., 88048 Friedrichshafen (DE)
(74) Vertreter: Frenkel, Matthias Alexander

(56) Entgegenhaltungen:
- US-A1- 2002 122 000
- US-A1- 2010 265 123
- YOUNIS M ET AL: "Antenna system for a forward looking SAR using digital beamforming on-receive-only", IGARSS 2000. IEEE 2000 INTERNATIONAL GEOSCIENCE AND REMOTE SENSING SYMPOSIUM. HONOLULU, HAWAII, JULY 24 - 28, 2000; [IEEE INTERNATIONAL GEOSCIENCE AND REMOTE SENSING SYMPOSIUM], NEW YORK, NY : IEEE, US, Bd. 5, 24. Juli 2000 (2000-07-24), Seiten 2343-2345, XP002182205, ISBN: 978-0-7803-6360-1

## Beschreibung

Die Erfindung betrifft ein SAR (Synthetic Aperture Radar)-System mit einer Antenne, die aus einer oder mehreren Teilantennen besteht, wobei jede Teilantenne eine Vielzahl an Phasenzentren und diesen zugeordnete Sende-/Empfangseinheiten sowie ein Signalverarbeitungsmittel zum kohärenten Verarbeiten von Signalen der Strahler umfasst.

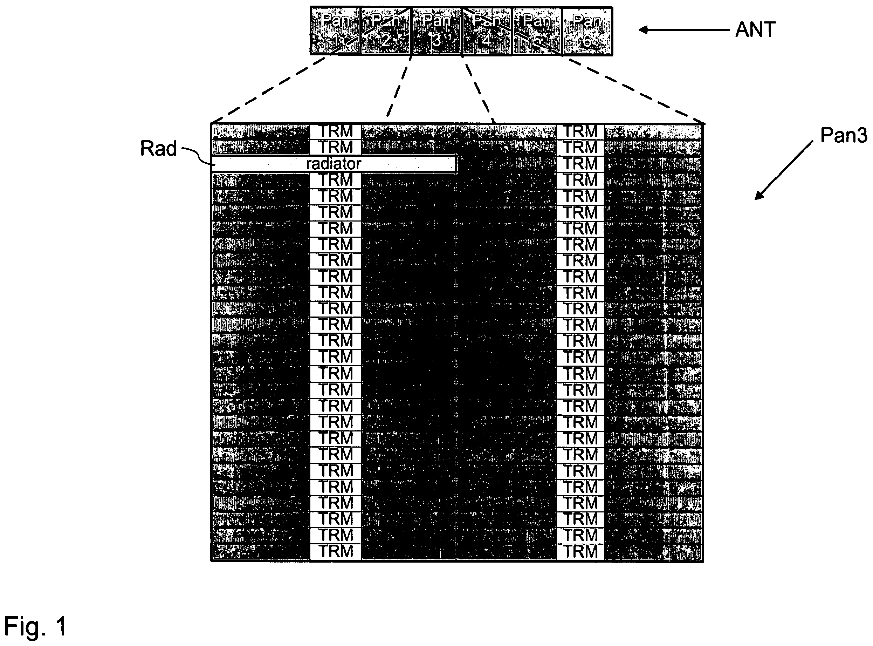

Ein derartiges SAR-System wird bspw. bei weltraumgestützten SAR-Instrumenten eingesetzt. Fig. 1 zeigt eine schematische Darstellung einer planaren Phased Array Antenne ANT. Die Antenne ANT umfasst als Teilantennen beispielhaft sechs Panele Pan1, ..., Pan6 mit jeweils 56 Strahlern Rad als Phasenzentren und einer entsprechenden Anzahl an Sende-/Empfangseinheiten TRM. Elektronische Komponenten der Antenne ANT, insbesondere Komponenten zur digitalen Strahlformung (Digital Beam Forming, DBF), sind nicht illustriert. Jedes der Panele Pan1, ..., Pan6 besteht in dem Ausführungsbeispiel aus zwei Strahlern Rad in horizontaler Richtung (typischerweise in Flugrichtung) und 28 horizontalen Strahlerpaaren in vertikaler Richtung (Elevation). Die horizontale Richtung verläuft in der Figur von links nach rechts, die vertikale Richtung von oben nach unten. Die Strahler Rad weisen ihre Einspeisepunkte für Sende- bzw. Empfangssignale jeweils in der Mitte auf. Hinter jedem der Einspeisepunkte ist die bereits erwähnte Sende-/Empfangseinheit TRM angeordnet.

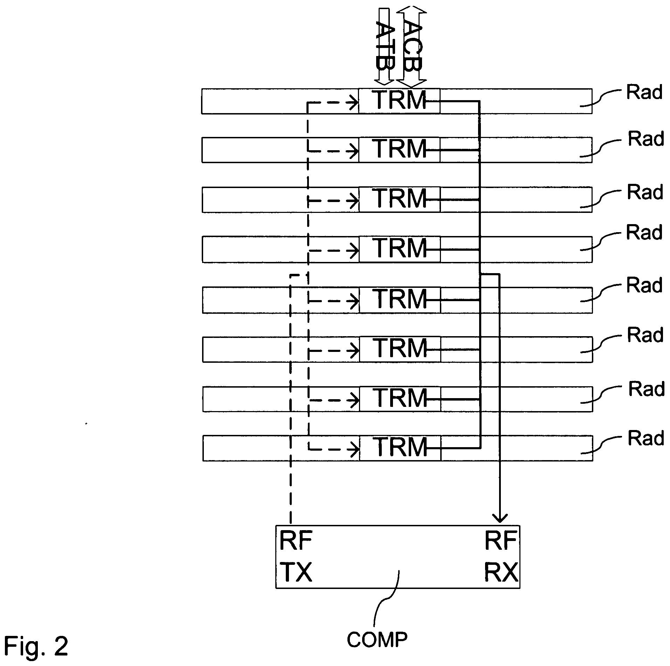

Jede Sende-/Empfangseinheit weist instrumentseitig einen Eingang für ein hochfrequentes Sendesignal (HF-Sendesignal) und einen Ausgang für ein hochfrequentes Empfangssignal (HF-Empfangssignal) auf. Das HF-Sendesignal wird als Radarsendepuls, das HF-Empfangssignal als Radarecho bezeichnet. Jede Sende-/Empfangseinheit TRM stellt in der vorliegenden Beschreibung einen eigenen Kanal dar. Prinzipiell können auch mehrere Sende-/Empfangseinheiten zu einem Kanal zusammengeführt werden. Die Sende-/Empfangseinheiten TRM werden bspw. über elektrische Leitungsbusse ATB und ACB gesteuert. ATB stellt den Antenna Timing Bus, ACB den Antenna Control Bus dar. Bei Phased Array Antennen für SAR-Systeme ist auf der Antenne typischerweise ein HF-Netzwerk zur Sendesignalverteilung und mindestens ein weiteres zur Empfangssignalkombination vorgesehen. In Fig. 2 ist in einer schematischen Darstellung das HF-Netzwerk einer typischen Antenne ohne digitale Strahlformung für nur acht Strahler Rad dargestellt. Der besseren Übersichtlichkeit halber sind die acht Strahler Rad mit vertikalen Abständen zueinander dargestellt. Die Sende-/Empfangseinheiten TRM sind mit einer zentralen Elektronik COMP gekoppelt. Soll durch die Strahler Rad der Antenne ANT ein Signal ausgesendet werden, so wird dieses über einen Ausgang RF TX als Sendesignal den Sende-/Empfangseinheiten TRM zugeführt. Ein analog kombiniertes Empfangssignal der Sende-/Empfangseinheiten TRM, das aus den jeweiligen Signalen der Sende-/Empfangseinheiten TRM der Strahler Rad gebildet ist, wird in der abseits der Antenne angeordneten zentralen Elektronik COMP digitalisiert, weiterverarbeitet und schließlich aufgezeichnet. Das kombinierte Empfangssignal wird der zentralen Elektronik COMP an einem Eingang RF RX zugeführt.

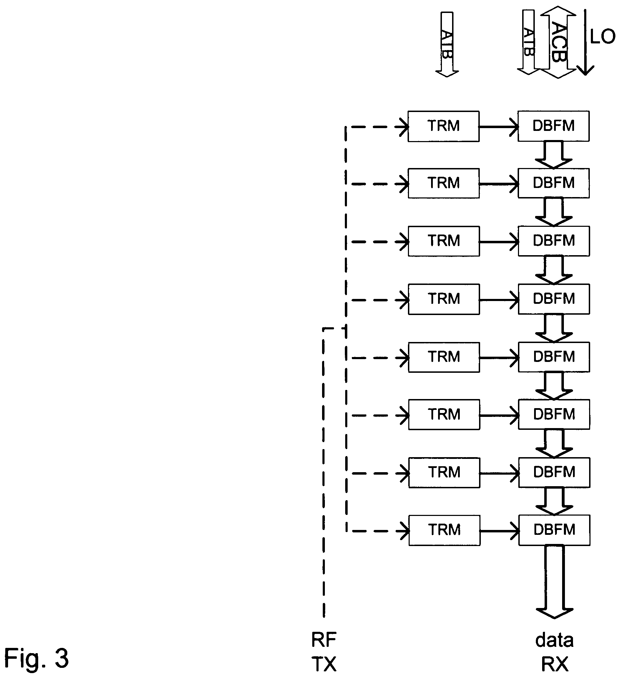

Um die Leistung von Radarantennen zu steigern, ist es bekannt, digitale Strahlformung (Digital Beam Forming) anzuwenden. Bei SAR-Systemen kommt dies bspw. bei HRWS (High Resolution Wide-Swath)-Instrumenten zur Anwendung. Eine mögliche Ausgestaltung ist in der EP 1 241 487 A1 beschrieben. Bei der digitalen Strahlformung werden die Empfangssignale aller Kanäle (im Ausführungsbeispiel aller Sende-/Empfangseinheiten) vor der Kombination prozessiert. Die Prozessierung bzw. Verarbeitung der Empfangssignale erfolgt üblicherweise digital. Eine mögliche HRWS-Architektur ist schematisch in Figur 3 gezeigt, wobei die Strahler der Übersichtlichkeit nicht gezeigt sind. Die aus den Sende-/Empfangseinheiten TRM hervorgehenden analogen Empfangssignale werden jeweils in einer Strahlformungseinheit DBFM (Digital Beam Forming Module) digitalisiert und prozessiert und als Datenstrom data RX an die zentrale Elektronik weiter geleitet. Der Datenstrom wird hierbei als Kette realisiert, da die Signalkombination nach der Digitalisierung zu einer Summation wird. In jeder Strahlformungseinheit DBFM werden das eigene Signal und das Signal des Vorgängers in der Kette vor der Weiterleitung aufsummiert.

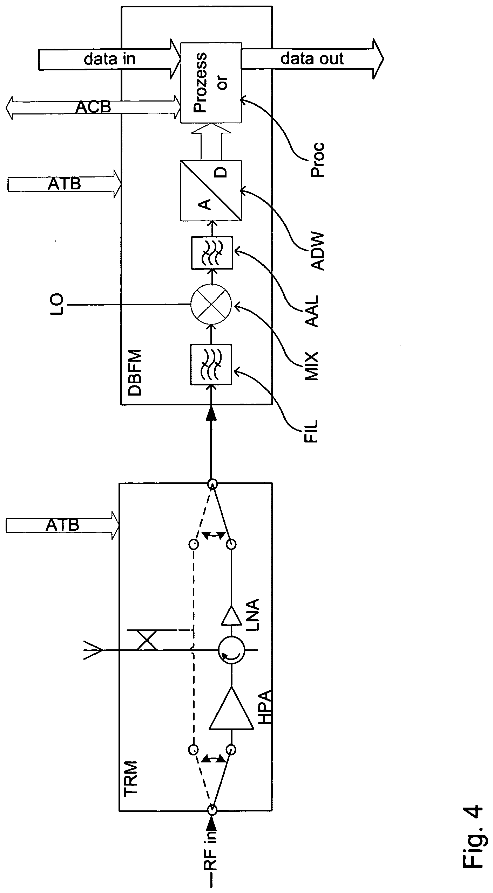

Die Funktionen der Strahlformungseinheit DBFM umfassen eine Signalfilterung, ein Heruntermischen des Signals in das Basisband, eine Anti-Alias Filterung, eine Digitalisierung, eine Anwendung der Strahlformungsalgorithmik für den aktuellen Kanal auf das digitale Signal, eine kohärente, d.h. synchrone, Summation des örtlichen Signals mit dem des vorausgehenden Signals sowie die Weitergabe des Summensignals an den nächsten Kanal, d.h. die Weiterleitung an die folgende Strahlformungseinheit in der Kette. Die hierzu notwendigen Komponenten FIL, MIX, AAL, ADW und Proc sind ohne detaillierte Berücksichtigung einer Verstärkeranordnung in Fig. 4 gezeigt. Dabei ist die Architektur eines einzelnen Kanals ohne variable Dämpfungsglieder und Phasenstellglieder dargestellt. Das sich am Ende ergebende Signal data out ist dasjenige Signal im Basisband, welches eine Empfangsantenne mit dem algorithmisch eingestellten Empfangsstrahl generieren würde.

Die beschriebene, aus der EP 1 241 487 A1 beschriebene Vorgehensweise beinhaltet die frühzeitige Digitalisierung der Signale bereits auf oder am Ausgang der Antenne. Als Folge ändert sich die empfangsseitige Architektur der Antenne im Vergleich zu einer klassischen Antenne ohne Strahlformung grundlegend. Das dort verwendete analoge Empfangsnetzwerk wird von sog. High-Speed Serial Links (HSSL), also schnellen seriellen Datenleitungen, ersetzt. Dies resultiert daraus, dass große Datenvolumen mit hoher Datenrate von der Antenne zur Zentralelektronik oder direkt zum Massenspeicher übertragen werden müssen. Je nach Bandbreite des Radars können Datenraten pro Panel von einigen 10 Gbps (10×10⁹ Bits pro Sekunde) auftreten.

Dies führt zu einem hohen Implementierungsaufwand, insbesondere mit raumfahrttauglichen Komponenten, mit vielen parallelen Leitungen und erheblichem Datenverarbeitungsaufwand. Für HRWS-Instrumente mit hoher Auflösung müssen für die Datenverarbeitung sehr leistungsfähige und teure Recheneinheiten, in der Regel FPGAs (Field-Programmable Gate Array) verwendet werden, deren Flugtauglichkeit nicht uneingeschränkt anerkannt ist. Darüber hinaus führen die hohen Datenraten der Empfangskette zu aufwändigen Kabelbäumen und hohem Stromverbrauch. Ein weiteres Problem der Architektur gemäß Fig. 3 ist die Fehlerabhängigkeit der Komponenten voneinander. Ein einziger Fehler in der HSSL-Datenkette bringt die Funktion des gesamten Panels zum Erliegen. Daher ist die Architektur in der dargestellten Form nicht flugfähig und erfordert ein Redundanzkonzept, welches die Komplexität in der Empfangskette weiter erhöht.

Aus der Veröffentlichung FISCHER, C. u.a.: Development of a High-Resolution Wide Swath SAR Demonstator. In: 8th European Conference of Synthetic Aperture Radar (EUSAR), 2010, S. 1166-1169 ist ein SAR-System mit digitalen Strahlformungseinheiten bekannt. Eine Strahlsummenbildung zur Gewinnung eines Ausgangssignals im Rahmen des digitalen Strahlformungs-Verfahrens erfolgt im Digitalbereich.

Aus der US 2002/0122000 A1 ist ein Radarsystem mit synthetischer Apertur mit einer Antenne bekannt, bei dem die Antenne aus mehreren Teilantennen besteht. Jede Teilantenne umfasst eine Vielzahl an Phasenzentren und diesen zugeordnete Sende-/Empfangseinheiten sowie ein Signalverarbeitungsmittel zum kohärenten Verarbeiten von Signalen der Strahler. Die Gewinnung eines Ausgangssignals erfolgt im Digitalbereich.

Aus der Veröffentlichung Marwan Younis et al.: "Antenna System for a Forward Looking SAR Using Digital Beamforming On-Receive-Only" in IGARSS 2000, IEEE 2000 International Geoscience and Remote Sensing Symposium, 2000, Bd. 5, 24. Juli 2000, Seiten 2343 bis 2345 ist ein weiteres SAR-System bekannt, bei dem die Gewinnung eines Ausgangssignals im Rahmen eines digitalen Strahlformungs-Verfahrens im Digitalbereich erfolgt.

US 2010/0265123 A1 offenbart ein Radarsystem zum Beamforming von Signalen die durch ein Phased Array empfangen wurden, das eine Vielzahl von Subarrays aufweist. Ein beispielhaftes Radarsystem umfasst eine Vielzahl von Phaseneinheiten, wobei jede Phaseneinheit dazu ausgebildet ist ein Signal von einem oder mehreren Subarrays zu empfangen. Jede Phaseneinheit umfasst einen Wellenformgenerator, der dazu ausgebildet ist eine analoge Wellenform zu erzeugen, die eine Frequenz aufweist entsprechend einer zeitvariierenden Phasenverschiebung. Jeder Wellenformgenerator ist so angeordnet, um digital die analoge Wellenform zu erzeugen und ein Vergleich des empfangenen Signals mit der Wellenform auszugeben, die die Zeit veränderliche Phasenverschiebung enthält. Das System umfasst ferner eine Kombinationseinheit, die dazu ausgebildet ist, die Ausgänge von der Vielzahl von Phaseneinheiten zum Beamforming zu kombinieren.

Es ist Aufgabe der vorliegenden Erfindung, ein SAR-System mit einer Radarantenne anzugeben, bei dem die Signalverarbeitung auf einfachere Weise erfolgen kann, wobei das System das Erfordernis der Flugtauglichkeit erfüllen soll.

Diese Aufgabe wird gelöst durch ein SAR-System gemäß den Merkmalen des Patentanspruches 1 und ein Verfahren gemäß den Merkmalen des Patentanspruches 11. Vorteilhafte Ausgestaltungen sind in den abhängigen Patentansprüchen angegeben.

Die Erfindung schafft ein SAR-System mit einer Antenne, die aus einer oder mehreren Teilantennen besteht, wobei jede Teilantenne eine Vielzahl an Phasenzentren und diesen zugeordnete Sende-/Empfangseinheiten sowie ein Signalverarbeitungsmittel zum kohärenten Verarbeiten von Signalen der Strahler umfasst. Erfindungsgemäß umfasst das Signalverarbeitungsmittel eine hybride Strahlformungseinheit zur Digitalisierung und Verarbeitung der von den Sende-/Empfangseinheiten der Strahler empfangenen analogen Empfangssignale, wobei die hybride Strahlformungseinheit dazu ausgebildet ist, die digital verarbeiteten Empfangssignale in analoge Empfangssignale zu wandeln und einem analogen Empfangsnetzwerk zuzuführen, durch das die analogen Signale der jeweiligen Sende-/Empfangseinheiten zu einem Ausgangssignal miteinander kombiniert werden.

Die Erfindung schafft weiter ein Verfahren zum Verarbeiten von SAR-Signalen, mit einer Antenne, die aus einer oder mehreren Teilantennen besteht, wobei jede Teilantenne eine Vielzahl an Phasenzentren und diesen zugeordnete Sende-/Empfangseinheiten sowie ein Signalverarbeitungsmittel zum kohärenten Verarbeiten von Signalen der Strahler umfasst. Bei dem Verfahren werden mittels einer hybriden Strahlformungseinheit des Signalverarbeitungsmittels die von den Sende-/Empfangseinheiten der Strahler empfangenen analogen Empfangssignale digitalisiert und verarbeitet. Anschließend werden die digital verarbeiteten Empfangssignale in analoge Empfangssignale gewandelt und einem analogen Empfangsnetzwerk zugeführt. Schließlich werden die analogen Signale der jeweiligen Sende-/Empfangseinheiten durch das analoge Empfangsnetzwerk zu einem Ausgangssignal miteinander kombiniert.

Die Erfindung reduziert die durch die eingangs beschriebene digitale Verarbeitung gestellten Implementierungsanforderungen durch Rückkehr zum klassischen analogen Empfangsnetzwerk, ohne dabei die Vorteile der flexiblen digitalen Signalverarbeitung aufzugeben. Aus der digitalen Signalverarbeitung wird die Signalsummenbildung herausgenommen, die erfindungsgemäß effizienter in Analogtechnik realisiert ist. Wie eingangs erläutert, ist eine digitale Summierung von Signalen mit niedrigem Signal-Rausch-Verhältnis (Signal-to-Noise-Ratio, SNR), aber großer Wortbreite für die erforderliche große Dynamik, unter Effizienzgesichtspunkten nicht optimal. Wegen des verhältnismäßig hohen Rauschpegels bei den einzelnen Kanälen fallen andererseits durch die vorgesehene digital-analoge Rückwandlung keine nennenswerten zusätzlichen Signalverluste auf.

Die Kombination der analogen Signale der jeweiligen Sende-/Empfangseinheiten zu einem Ausgangssignal wird effizient in Analogtechnik realisiert. Hierzu wird das hybride Strahlformungsmodul bereitgestellt, welches die jeweiligen Empfangssignale der Sende-/Empfangseinheiten in üblicher Weise digitalisiert und danach digital prozessiert. Das synchronisierte und vorzugsweise korrigierte digitale Signal wird anschließend wieder in ein analoges Signal zurückgewandelt und in das analoge Empfangsnetzwerk zur weiteren Verarbeitung eingespeist. Das hybride Strahlformungsmodul kann dabei auf einem einzigen Chip in sogenannter "Mixed Signal"-Technologie implementiert werden. Dieser kann zwischen einer jeweiligen Sende-/Empfangseinheit und dem analogen Empfangsnetzwerk vorgesehen sein. Im Idealfall wird die Anordnung in die Sende-/Empfangseinheit integriert. Im Ergebnis wird aus der digitalen Signalverarbeitung damit die Signalsummenbildung herausgenommen, die erfindungsgemäß effizienter in Analogtechnik realisiert ist.

Insbesondere kann die Antenne als planare Phased Array Antenne ausgebildet sein.

Gemäß einer vorteilhaften Ausgestaltung ist die Strahlformungseinheit ferner dazu ausgebildet, bei der Verarbeitung der digitalisierten Empfangssignale diese zur digitalen Strahlformung zu prozessieren und zueinander zu synchronisieren, und optional, zu korrigieren. Die frühzeitige Digitalisierung der einzelnen Empfangssignale ist zweckmäßig, um die Strahlformungs-Funktionen mit der notwendigen Genauigkeit durchführen zu können. Die Digitalisierung erlaubt auch eine hochgenaue Synchronisierung der Empfangssignale vor deren Kombination, welche üblicherweise den letzten Schritt der Strahlformung darstellt. Durch die analoge Kombination der Signale kann der Aufwand gegenüber der digitalen Verarbeitung stark reduziert werden. Hierdurch kann die Komplexität der gesamten Antenne gering gehalten werden.

Es ist weiter zweckmäßig, wenn die Strahlformungseinheit einen Digital-Analog-Wandler umfasst, durch den die digital verarbeiteten Empfangssignale in die jeweiligen analogen Signale wandelbar sind.

Insbesondere ist das analoge Empfangsnetzwerk dem Digital-Analog-Wandler unmittelbar nachgeschaltet.

In einer weiteren zweckmäßigen Ausgestaltung umfasst die Kombination der analogen Signale durch das analoge Empfangsnetzwerk eine Summation der Signale, sodass das Ausgangssignal ein Summensignal ist.

Es ist weiterhin zweckmäßig, wenn das Signalverarbeitungsmittel dazu ausgebildet ist, die analogen Signale zu kalibrieren, wobei ein zur Kalibration notwendiges digitales Kalibriersignal direkt an den Eingängen des analogen Empfangsnetzwerks durch dieses erzeugt werden kann.

Gemäß einer weiteren zweckmäßigen Ausgestaltung führt das Signalverarbeitungsmittel zur Verarbeitung des von dem analogen Empfangsnetzwerk erzeugten Ausgangssignals dieses einem Analog-Digital-Wandler einer zentralen Recheneinheit zu. Hierdurch kann in gewohnter Weise eine Weiterverarbeitung des digitalen Ausgangssignals durch die zentrale Recheneinheit erfolgen.

Zweckmäßigerweise erfolgen die Signalwandlung durch den Digital-Analog-Wandler und/durch den Analog-Digital-Wandler im Basisband oder bei niedriger Frequenz
Es ist weiterhin zweckmäßig, wenn das Signalverarbeitungsmittel dazu ausgebildet ist, die Signale mehrerer Sende-/Empfangseinheiten vor der Analogwandlung durch den Digital-Analog-Wandler zu einem Signalkanal zusammenzufassen. In diesem Fall werden die Empfangssignale des Kanals in der aus dem Stand der Technik bekannten Weise digitalisiert und danach digital prozessiert. Das synchronisierte, und ggf. korrigierte, summierte digitale Signal wird anschließend wieder in das analoge Signal zurückgewandelt und in das analoge Empfangsnetzwerk eingespeist.

Es ist weiterhin zweckmäßig, wenn das Signalverarbeitungsmittel in einem Rücckanal einen Aufwärtsmischer, einen Verstärker und einen Filter umfasst zur Erzeugung eines digitalen Chirp-Signals, das auf einer Trägerfrequenz und als Sendesignal an die Sende-/Empfangseinheit weitergeleitet wird. Ein Vorteil dieser Ausgestaltung besteht darin, dass das Hochfrequenz-Netzwerk für das Sendesignal entfallen kann.

Das erfindungsgemäße Vorgehen weist folgende Vorteile auf:
- Im Vergleich zu den aus dem Stand der Technik bekannten Lösungen ergibt sich eine reduzierte Prozessorkomplexität. Diese resultiert aus dem Entfall zweier HSSL-Schnittstellen und dem zugehörigen logischen Synchronisations- und EDAC (Error Detection and Correction)-Aufwand. Ein Datenpuffer zur Synchronisation der Latenzzeit einer gesamten Kette mit z.B. 28 Kanälen kann gegenüber der voll-digitalen Lösung entfallen. Die mit der Reduktion der Prozessorkomplexität erreichte Absenkung des Stromverbrauchs liegt in einer ähnlichen Größenordnung wie der des erfindungsgemäß benötigten zusätzlichen Digital-Analog-Wandlers.
- Die Architektur des vorgeschlagenen SAR-Systems ist inhärent redundant im Sinne einer "Graceful Degradation".
- Bei Systemen mit hoher Dynamik ist die Auflösung des Analog-Digital-Wandlers für die Prozessierung und Synchronisation eines jeweiligen analogen Empfangssignals eines Kanals hoch anzusetzen. Die Auflösung beträgt 10 oder 12 Bit. Die hieraus resultierende Wortbreite führt bei einer voll-digitalen Verarbeitung zu hohen Datenraten auf der HSSL-Datenkette. Diese Begrenzung existiert bei dem vorgeschlagenen System nicht. Es ist lediglich notwendig, eine entsprechend große Wortbreite des Digital-Analog-Konverters zu wählen.

- Es entfällt die Anforderung an einen digitalen fraktionalen Dezimierungsfilter zur verlustlosen Datenkompression, der teilweise bei der voll-digitalen Verarbeitung erforderlich ist. Dieser Filter ist der aufwändigste Digitalfilter, der in der herkömmlichen Strahlformungseinheit vorkommt.
- Der Prozessor und der Digital-Analog-Wandler können zur Eichsignalgenerierung bei der Kalibrierung des Empfangsnetzwerkes eingesetzt werden.
- Alle digitalen Steuerfunktionen der Sende-/Empfangseinheit und einer sogenannten Tile Control Unit (TCU) zur Steuerung des Antennenpanels, können in den zentralen Prozessor übertragen werden. Diese Einheit wird entsprechend vereinfacht.

Verfügt das System über den oben beschriebenen Rückkanal, so ergeben sich zusätzlich nachfolgende Vorteile:
- Es ist eine hohe radiometrische Genauigkeit erzielbar, die mit der dazugehörigen Antenne erreichbar ist. Das Signalverarbeitungsmittel kann hierbei besonders gut kalibriert werden.
- Ein Teil der zentralen Elektronik zur Generierung des Sendesignals und des sendeseitigen Hochfrequenz-Netzwerks kann eingespart werden. Das lokal erzeugte Sendesignal durchläuft kein langes Sendenetzwerk, das kalibriert werden muss. An das lokal erzeugte Sendesignal werden geringere Signal-Rausch-Verhältnis-Anforderungen gestellt, als an ein zentral erzeugtes Signal.
- Variable Dämpfungsglieder und Phasenstellglieder können eingespart werden, wenn ein jeweiliges, einer Sende-/Empfangseinheit zugeordnetes Signalverarbeitungsmittel mit dem Rückkanal ausgestattet ist. Die variablen Dämpfungsglieder und Phasenstellglieder werden jedoch erforderlich, wenn mehrere Sende-/Empfangseinheiten gemeinsam einem Signalverarbeitungsmittel zugeordnet sind, wie dies bspw. bei der Zusammenfassung zu einem Kanal der Fall ist.

Die Erfindung wird nachfolgend näher anhand eines Ausführungsbeispiels erläutert. Es zeigen:
- Fig. 1: eine schematische Darstellung einer bekannten planaren Phased Array Antenne mit mehreren Panelen als Teilantennen, wobei für ein Panel eine entsprechende Anordnung von Strahlern als Phasenzentren dargestellt ist,
- Fig. 2: ein bekanntes HF-Netzwerk einer typischen SAR-Antenne ohne digitale Strahlformung,
- Fig. 3: eine bekannte HRWS-Architektur eines SAR-Systems,
- Fig. 4: eine schematische Darstellung der Architektur eines bekannten Signalverarbeitungsmittels für einen einzelnen Empfangskanal,
- Fig. 5: eine schematische Darstellung einer erfindungsgemäßen Architektur eines Signalverarbeitungsmittels eines SAR-Systems,
- Fig. 6: eine schematische Darstellung einer erfindungsgemäß vorgesehenen Signalverarbeitungskette eines Empfangskanals,
- Fig. 7: einen Kalibrierpfad in einem erfindungsgemäßen Signalverarbeitungsmittel,
- Fig. 8: eine schematische Darstellung der Netzwerkinfrastruktur eines abgewandelten Ausführungsbeispiels der Architektur eines erfindungsgemäßen Signalverarbeitungsmittels, und
- Fig. 9: eine schematische Darstellung einer erfindungsgemäßen Signalverarbeitungskette in abgewandelter Form.

Die erfindungsgemäße Architektur eines SAR-Systems mit einer Radarantenne geht von einer Anordnung aus, wie diese bereits eingangs in Verbindung mit den Fig. 1 bis 4 beschrieben wurde. Wie dort bereits erläutert, besteht die Antenne ANT aus einer Anzahl an Teilantennen Pan1, ..., Pan6, wobei jedes der Teilantennen eine Vielzahl an Phasenzentren Rad und diesen zugeordnete Sende-/Empfangseinheiten TRM sowie ein Signalverarbeitungsmittel zum kohärenten Verarbeiten von Signalen der Strahler umfasst.

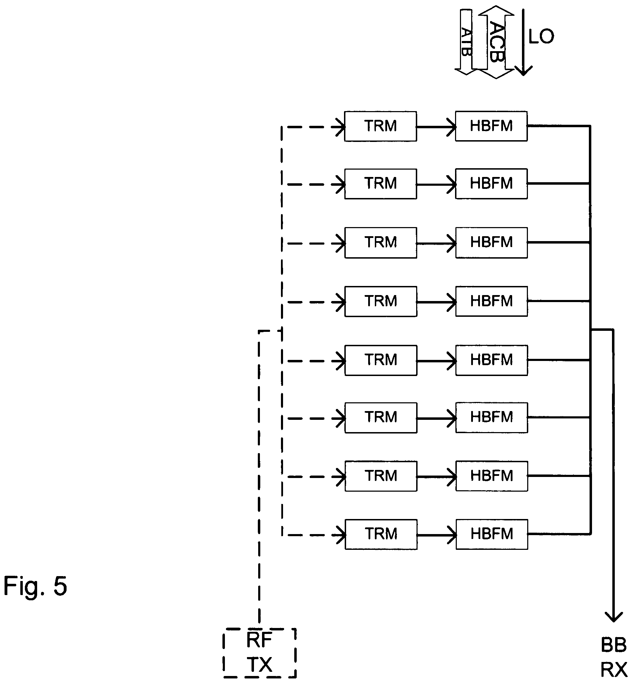

Fig. 5 zeigt eine mögliche Architektur zur Signalverarbeitung gemäß einer Ausgestaltungsvariante der Erfindung. Entsprechend der Beschreibung und Darstellung in Fig. 3 sind in Fig. 5 beispielhaft lediglich acht Strahler sowie die an der Signalverarbeitung beteiligten Komponenten dargestellt. Für jeden Strahler (was in der vorliegenden Beschreibung gleichbedeutend mit einem Kanal ist) ist eine Sende-/Empfangseinheit TRM und ein erfindungsgemäßes Signalverarbeitungsmittel dargestellt. Ein jeweiliges Signalverarbeitungsmittel umfasst im Unterschied zu den im Stand der Technik verwendeten digitalen Strahlformungseinheiten DBFM eine hybride Strahlformungseinheit HBFM.

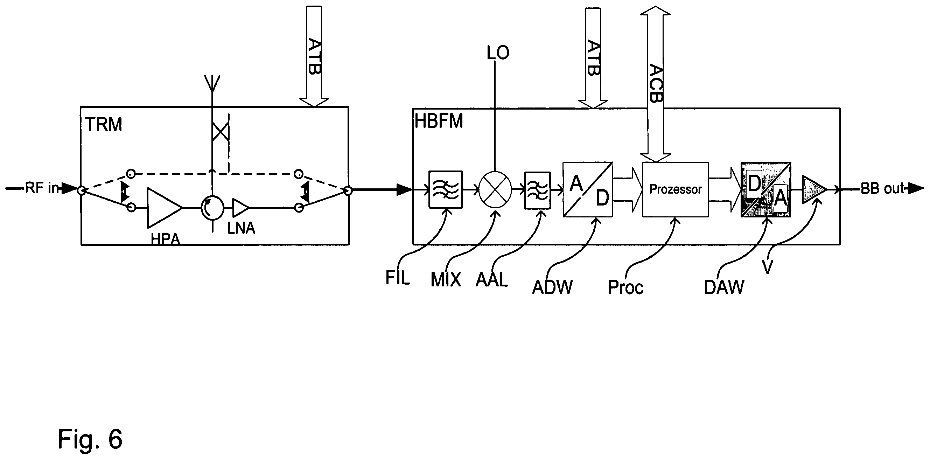

Der genauere Aufbau der Sende-/Empfangseinheit und der hybriden Strahlformungseinheit HBFM des erfindungsgemäßen Signalverarbeitungsmittels ist besser in Fig. 6 dargestellt. Die hybride Strahlformungseinheit HBFM umfasst - entsprechend der digitalen Signalformungseinheit gemäß dem Stand der Technik - einen Filter FIL zur Signalfilterung, einen Mischer MIX zum Heruntermischen des analogen Empfangssignals in das Basisband, einen Anti-Alias Filter AAL, einen Analog-Digital-Wandler ADW, sowie einen Prozessor Proc zur Anwendung einer Strahlformungs-Algorithmik für den aktuellen Kanal auf das digitale Signal. Zusätzlich umfasst die hybride Strahlformungseinheit HBFM einen dem Prozessor Proc nachgeschalteten Digital-Analog-Wandler DAW und einen Verstärker V. Das hieraus resultierende Signal BBout wird einem in Fig. 6 nicht dargestellten analogen Empfangsnetzwerk zugeführt. Bei der erfindungsgemäßen Ausgestaltung der Strahlformungseinheit kann ein Einlesen des Ausgangssignals des Nachbarkanals über ein HSSL (High Speed Serial Link) entfallen.

In der hybriden Strahlformungseinheit HBFM erfolgt somit eine Digitalisierung der einzelnen Empfangskanäle, um die Funktionen der Strahlformung mit der notwendigen Genauigkeit durchführen zu können. Die Digitalisierung in der hybriden Strahlformungseinheit erlaubt eine hochgenaue Synchronisierung sämtlicher Kanalsignale vor deren Kombination in dem analogen Empfangsnetzwerk.

Die hybride Strahlformungseinheit kann auf einem einzigen Chip in sogenannter "Mixed Signal"-Technologie implementiert werden, welcher zwischen einer jeweiligen Sende-/Empfangseinheit TRM und dem in den Fig. 5 und 6 nicht dargestellten analogen Empfangsnetzwerk eingefügt wird. Besonders bevorzugt wird der Chip bzw. die hybride Strahlformungseinheit in die Sende-/Empfangseinheit integriert.

Die Erfindung basiert somit darauf, dass die kritische Synchronisierung und Kanalangleichung nach wie vor im digitalen Bereich der Strahlformungseinheit erfolgt. Lediglich die einfache Summierung der pro Kanal ausgegebenen Daten erfolgt analog durch eine Hochfrequenz-Signalkombination.

Das analoge Ausgangssignal jedes Kanals befindet sich im oder nahe am Basisband und ist daher radiometrisch einfacher beherrschbar als bei Trägerfrequenz. Bei klassischen SAR-Systemen werden die Empfangssignale bei Trägerfrequenz zusammengeführt und erfolgreich kalibriert. Eine Kalibration des Empfangssignalnetzwerkes findet auch bei dem erfindungsgemäßen SAR-System statt, wobei das Kalibriersignal digital an den Netzwerkeingängen generiert wird.

Eine Verschlechterung des Radarempfangssignals muss durch das erfindungsgemäß vorgesehene Einfügen des zusätzlichen Digital-Analog-Wandlers DAW und eines weiteren Analog-Digital-Wandlers in der in Fig. 2 dargestellten zentralen Elektronik nicht in Kauf genommen werden. Durch geeignete Wahl der Abtastrate und Auflösung des Digital-Analog-Wandlers DAW kann eine beliebig gute Qualität des Analogsignals erreicht werden. Das dem Signal dabei zugeführte Quantisierungsrauschen sollte gegenüber dem vorhandenen Signaleigenrauschen vernachlässigbar sein. Das vor der Digital-Analog-Wandlung vorhandene Kanalsignal besitzt grundsätzlich einen hohen Rauschpegel (typischerweise SNR <16 dB bei höchster Dynamik), sodass schon Digital-Analog-Wandler im mittleren Leistungsspektrum verwendet werden können.

Die Analog-Digital-Wandlung des Summensignals findet in der in den Fig. 4 bis 9 nicht dargestellten zentralen Elektronik COMP abseits der Antenne statt. Es ist ausreichend, wenn die Analog-Digital-Wandlung des Summensignals lediglich einmal pro Panel erfolgt. Hier können Analog-Digital-Wandler mit hoher Auflösung (z.B. 12 Bit) eingesetzt werden. Die gegenüber der konventionellen Strahlformungseinheit zusätzlich eingefügte Digital-Analog- und Analog-Digital-Wandlung bei der hybriden Strahlformungseinheit wird zudem an einem Signal im oder nahe am Basisband durchgeführt, wodurch die Anforderungen an Bauteile und Abtastung im Vergleich zu einem Signal im Trägerfrequenzband erheblich reduziert sind.

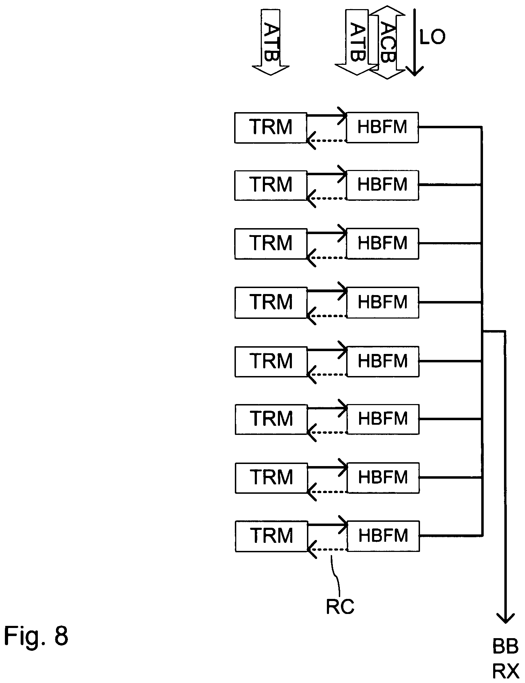

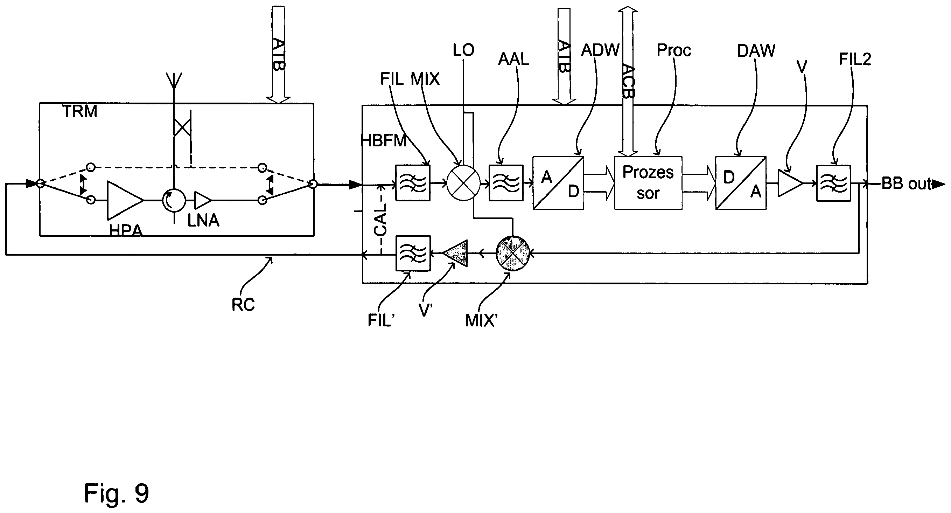

In einer nicht dargestellten Ausgestaltungsvariante lassen sich mehrere von den Sende-/Empfangseinheiten TRM empfangenen Empfangssignale zu einem Signalkanal zusammenschalten. Dies wird insbesondere dann zweckmäßig, wenn keine hohen Anforderungen an die Antennenagilität gestellt werden. Auf diese Weise lässt sich die Antennenelektronik weiterhin in ihrer Komplexität reduzieren. Die Verfügbarkeit des Digital-Analog-Wandlers DAW in der Strahlformungseinheit eröffnet weitere Möglichkeiten, sofern - wie in Fig. 9 dargestellt - eine zusätzliche Leitung (Rückkanal RC) mit einem Aufwärtsmischer MIX', Verstärker V' und Filter FIL' vorgesehen ist. Der Rückkanal RC ist dabei mit dem Eingang der Sende-/Empfangseinheit TRM gekoppelt. In dieser Ausgestaltung kann der Prozessor Proc während der Sendepulsdauer ein digitales Chirp-Signal erzeugen, welches auf die Trägerfrequenz moduliert und als Eingangssignal an die Sende-/Empfangseinheit TRM weitergeleitet wird. In diesem Fall kann das HF-Netzwerk für das Sendesignal entfallen. Dies ist schematisch in Fig. 8 dargestellt.

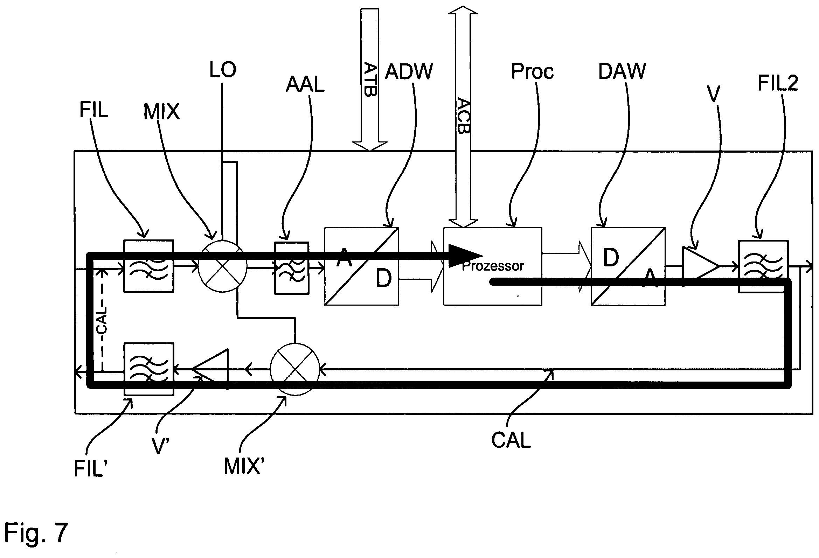

Die Vorteile dieser Lösung sind eine hohe radiometrische Genauigkeit, die mit der dazugehörigen Antenne erreichbar ist. Die in Fig. 9 dargestellte hybride Strahlformungseinheit HBFM kann besonders gut kalibriert werden, wenn der in Fig. 7 dargestellte geschlossene Kalibrierpfad CAL eingestellt wird. Ein weiterer Vorteil ist die Einsparung eines Teils der zentralen Elektronik zur Generierung des Sendesignals und des sendeseitigen HF-Netzwerkes. Das lokal erzeugte Sendesignal durchläuft kein langes Sendenetzwerk, welches kalibriert werden muss. Ferner werden an das lokal erzeugte Sendesignal geringere SNR-Anforderungen gestellt, als an ein zentral erzeugtes Sendesignal.

Wenn pro Sende-/Empfangseinheit TRM eine wie in Fig. 9 ausgebildete hybride Strahlformungseinheit HBFM vorgesehen ist, können alle variablen Dämpfungsglieder und Phasenstellglieder eingespart werden.

Die erfindungsgemäß vorgesehene hybride Strahlformungseinheit beschränkt den Einsatz der bei hohen Datenraten ressourcenintensiven Digitaltechnik auf die komplexen algorithmischen Funktionen und überlässt die einfache Summation von synchronen Signalen dem hier effizienteren Analogbereich. Dies führt zu einer Verminderung der Komplexität und Menge an Elektronik für die Strahlformungseinheit auf der Antenne und damit zu Kostenvorteilen. Insbesondere kann im Vergleich zum Stand der Technik ein Prozessor mit reduzierter Rechenleistung eingesetzt werden. Ferner fallen die HSSL-Kettenglieder weg.

Die vorgeschlagene Architektur ist inhärent fehlerredundant im Sinne einer "Graceful Degradation", ähnlich bei den Sende-/Empfangseinheiten TRM. Es sind daher keine Redundanzen bei den Signalverarbeitungsmodulen und Datengruppen erforderlich, was ebenfalls der Menge an zu installierender Elektronik und folglich den Herstellungskosten zugute kommt.

## Patentansprüche

1. SAR-System mit einer Radarantenne (ANT), die aus einer oder mehreren Teilantennen (Pan1, ..., Pan6) besteht, wobei jede Teilantenne (Pan1, ..., Pan6) eine Vielzahl an Phasenzentren (Rad) und diesen zugeordnete Sende-/Empfangseinheiten (TRM) sowie ein Signalverarbeitungsmittel zum kohärenten Verarbeiten von Signalen der Strahler (Rad) umfasst, **dadurch gekennzeichnet, dass** das Signalverarbeitungsmittel eine hybride Strahlformungseinheit (HBFM) zur Digitalisierung und Verarbeitung der von den Sende-/Empfangseinheiten (TRM) der Phasenzentren (Rad) empfangenen analogen Empfangssignale umfasst, wobei die hybride Strahlformungseinheit (HBFM) dazu ausgebildet ist, die digital verarbeiteten Empfangssignale in analoge Empfangssignale zu wandeln und einem analogen Empfangsnetzwerk zuzuführen, durch das die analogen Signale der jeweiligen Sende-/Empfangseinheiten (TRM) zu einem Ausgangssignal miteinander kombiniert werden.

2. System nach Anspruch 1, **dadurch gekennzeichnet, dass** die Strahlformungseinheit (HBFM) dazu ausgebildet ist, bei der Verarbeitung der digitalisierten Empfangssignale diese zur digitalen Strahlformung zu prozessieren und zueinander zu synchronisieren, und optional, zu korrigieren.

3. System nach Anspruch 1 oder 2, **dadurch gekennzeichnet, dass** die Strahlformungseinheit (HBFM) einen Digital-Analog-Wandler (DAW) umfasst, durch den die digital verarbeiteten Empfangssignale in die jeweiligen analogen Signale wandelbar sind.

4. System nach Anspruch 3, **dadurch gekennzeichnet, dass** das analoge Empfangsnetzwerk dem Digital-Analog-Wandler (DAW) unmittelbar nachgeschaltet ist.

5. System nach einem der vorhergehenden Ansprüche, **dadurch gekennzeichnet, dass** die Kombination der analogen Signale durch das analoge Empfangsnetzwerk eine Summation der Signale umfasst, so dass das Ausgangssignal ein Summensignal ist.

6. System nach einem der vorhergehenden Ansprüche, **dadurch gekennzeichnet, dass** das Signalverarbeitungsmittel dazu ausgebildet ist, die analogen Signale zu kalibrieren, wobei ein zur Kalibration notwendiges digitales Kalibriersignal direkt an den Eingängen des analogen Empfangsnetzwerks durch dieses erzeugt werden kann.

7. System nach einem der vorhergehenden Ansprüche, **dadurch gekennzeichnet, dass** das Signalverarbeitungsmittel zur Verarbeitung des von dem analogen Empfangsnetzwerks erzeugten Ausgangssignals dieses einem Analog-Digital-Wandler (ADW2) einer zentralen Recheneinheit (COMP) zuführt.

8. System nach einem der Ansprüche 3 bis 7, **dadurch gekennzeichnet, dass** die Signalwandlung durch den Digital-Analog-Wandler (DAW) und/oder durch den Analog-Digital-Wandler (ADW2) nahe dem oder im Basisband erfolgen.

9. System nach einem der vorhergehenden Ansprüche, **dadurch gekennzeichnet, dass** das Signalverarbeitungsmittel dazu ausgebildet ist, die Signale mehrerer Sende-/Empfangseinheiten (TRM) vor der Analogwandlung durch den Digital-Analog-Wandler (DAW) zu einem Signalkanal zusammenzufassen.

10. System nach einem der vorhergehenden Ansprüche, **dadurch gekennzeichnet, dass** das Signalverarbeitungsmittel in einem Rückkanal einen Aufwärtsmischer, einen Verstärker und einen Filter umfasst zur Erzeugung eines digitalen Chipsignals, das auf einer Trägerfrequenz und als Eingangssignal an die Sende-/Empfangseinheit (TRM) weitergeleitet wird.

11. Verfahren zum Verarbeiten von SAR-Signalen, mit einer Radarantenne (ANT), die aus einer oder mehreren Teilantennen (Pan1, ..., Pan6) besteht, wobei jede Teilantenne (Pan1, ..., Pan6) eine Vielzahl an Phasenzentren (Rad) und diesen zugeordneten Sende-/Empfangseinheiten (TRM) sowie ein Signalverarbeitungsmittel zum kohärenten Verarbeiten von Signalen der Phasenzentren (Rad) umfasst, **dadurch gekennzeichnet, dass**
- mittels einer hybriden Strahlformungseinheit (HBFM) des Signalverarbeitungsmittels die von den Sende-/Empfangseinheiten (TRM) der Phasenzentren (Rad) empfangenen analogen Empfangssignale digitalisiert und verarbeitet werden;
- die digital verarbeiteten Empfangssignale in analoge Empfangssignale gewandelt und einem analogen Empfangsnetzwerk zugeführt werden;
- - die analogen Signale der jeweiligen Sende-/Empfangseinheiten (TRM) durch das analoge Empfangsnetzwerk zu einem Ausgangssignal miteinander kombiniert werden.

## Claims

1. A SAR system with a radar antenna (ANT) comprising one or more partial antennas (Pan1, ..., Pan6), wherein each partial antenna (Pan1, ..., Pan6) comprises a plurality of phase centers (Rad) and transmit/receive modules (TRM) assigned thereto as well as a signal processing means for the coherent processing of signals of the radiators (Rad), **characterized in that** the signal processing means comprises a hybrid beam forming module (HBFM) for the digitalization and processing of the analog receive signals received by the transmit/receive modules (TRM) of the phase centers (Rad), wherein the hybrid beam forming module (HBFM) is embodied to convert the digitally processed receive signals into analog receive signals, and to feed them to an analog receive network, by means of which the analog signals of the respective transmit/receive modules (TRM) are combined with one another to form an output signal.

2. The system according to claim 1, **characterized in that** the beam forming module (HBRM) is embodied during the processing of the digitalized receive signals to process them for digital beam formation and to synchronize them with one another and optionally to correct them.

3. The system according to claim 1 or 2, **characterized in that** the beam forming module (HBFM) comprises a digital-to-analog converter (DAW) by which the digitally processed receive signals can be converted into the respective analog signals.

4. The system according to claim 3, **characterized in that** the analog receive network is connected immediately downstream of the digital-to-analog converter (DAW).

5. The system according to one of the preceding claims, **characterized in that** the combination of the analog signals by the analog receive network comprises a summation of the signals so that the output signal is a sum signal.

6. The system according to one of the preceding claims, **characterized in that** the signal processing means is embodied to calibrate the analog signals, wherein a digital calibration signal necessary for the calibration can be directly generated at the inputs of the analog receive network thereby.

7. The system according to one of the preceding claims, **characterized in that** the signal processing means for processing the output signal generated by the analog receive network feeds it to an analog-to-digital converter (ADW2) of a central processing unit (COMP).

8. The system according to one of claims 3 through 7, **characterized in that** the signal conversion by the digital-to-analog converter (DAW) and/or by the analog-to-digital converter (DAW2) are carried out near to or in the baseband.

9. The system according to one of the preceding claims, **characterized in that** the signal processing means is embodied to combine the signals of several transmit/receive modules (TRM) to form a signal channel before the analog conversion by the digital- to-analog converter (DAW).

10. The system according to one of the preceding claims, **characterized in that** the signal processing means in a feedback channel comprises an upward mixer, an amplifier and a filter to generate a digital chip signal, which is fed on a carrier frequency and as an input signal to the transmit/receive module (TRM).

11. A method for processing SAR signals, with a radar antenna (ANT), which is composed of one or more partial antennas (Pan1, ..., Pan6), wherein each partial antenna (Pan1, ..., Pan6) comprises a plurality of phase centers (Rad) and transmit/receive modules (TRM) assigned thereto as well as a signal processing means for the coherent processing of signals of the radiators (Rad), **characterized in that**
- the analog receive signals received by the transmit/receive modules (TRM) of the phase centers (Rad) are digitalized and processed by means of a hybrid beam forming module (HBFM) of the signal processing means;
- the digitally processed receive signals are converted into analog receive signals and fed to an analog receive network;
- the analog signals of the respective transmit/receive modules (TRM) are combined with one another by the analog receive network to form an output signal.

## Revendications

1. Système de radar à ouverture synthétique équipé d'une antenne radar (ANT) constituée d'une ou plusieurs sous-antennes (Pan1, ..., Pan6), chaque sous-antenne (Pan1, ..., Pan6) comprenant une pluralité de centres de phase (Rad), des unités d'émission-réception (TRM) affectées à ces centres de phase et un moyen de traitement de signaux pour le traitement cohérent des signaux des éléments rayonnants (Rad), **caractérisé en ce que** ledit moyen de traitement de signaux comprend un module de formation de faisceau hybride (HBFM) pour la numérisation et le traitement des signaux de réception analogiques reçus par les unités d'émission-réception (TRM) des centres de phase (Rad), ce module de formation de faisceau hybride (HBFM) étant conçu pour convertir les signaux de réception traités numériquement en des signaux de réception analogiques et pour amener ceux-ci à un réseau de réception analogique à l'aide duquel les signaux analogiques de chacune des unités d'émission-réception sont combinés les uns avec les autres dans un signal de sortie.

2. Système selon la revendication 1, **caractérisé en ce que** lors du traitement des signaux de réception numérisés, le module de formation de faisceau hybride (HBFM) est conçu pour procéder à la mise en forme du faisceau numérique à partir des signaux de réception numérisés, pour synchroniser ceux-ci entre eux et optionnellement les corriger.

3. Système selon la revendication 1 ou 2, **caractérisé en ce que** le module de formation de faisceau hybride (HBFM) comprend un convertisseur numérique-analogique (DAW) à l'aide duquel les signaux de réception numériquement traités peuvent être respectivement convertis en signaux analogiques.

4. Système selon la revendication 3, **caractérisé en ce que** le réseau de réception analogique est monté directement en aval du convertisseur numérique-analogique (DAW).

5. Système selon l'une des revendications précédentes, **caractérisé en ce que** la combinaison des signaux analogiques à l'aide du réseau de réception analogique comprend une addition des signaux si bien que le signal de sortie est un signal cumulé.

6. Système selon l'une des revendications précédentes, **caractérisé en ce que** le moyen de traitement de signal est conçu pour étalonner les signaux analogiques, un signal d'étalonnage numérique pouvant être produit directement aux entrées du réseau de réception analogique par ce dernier.

7. Système selon l'une des revendications précédentes, **caractérisé en ce que** le moyen de traitement de signal amène le signal de sortie à un convertisseur analogique-numérique (ADW2) d'un calculateur central (COMP) pour traiter le signal de sortie produit par le réseau de réception analogique.

8. Système selon l'une des revendications 3 à 7, **caractérisé en ce que** la conversion du signal à l'aide du convertisseur numérique-analogique (DAW) et/ou du convertisseur analogique-numérique (ADW2) s'effectue dans ou près de la base de bande.

9. Système selon l'une des revendications précédentes, **caractérisé en ce que** le moyen de traitement de signal est conçu pour regrouper en un seul canal de signaux les signaux de plusieurs unités d'émission-réception (TRM) avant la conversion analogique à l'aide du convertisseur numérique-analogique (DAW).

10. Système selon l'une des revendications précédentes, **caractérisé en ce que** le moyen de traitement de signal comprend dans un canal arrière un mélangeur élévateur, un amplificateur et un filtre pour produire un signal numérique sur puce qui sera transmis en tant que signal d'entrée sur une fréquence porteuse à l'unité d'émission-réception (TRM).

11. Procédé pour traiter les signaux d'un système radar à ouverture synthétique équipé d'une antenne radar (ANT) constituée d'une ou plusieurs sous-antennes (Pan1, ..., Pan6), chaque sous-antenne (Pan1, ..., Pan6) comprenant une pluralité de centres de phase (Rad), des unités d'émission-réception (TRM) affectées à ces centres de phase et un moyen de traitement de signaux pour le traitement cohérent des signaux des centres de phase (Rad), **caractérisé en ce que**
- les signaux de réception analogiques reçus par les unités d'émission-réception (TRM) des centres de phase (Rad) sont numérisés et traités par un module de formation de faisceau hybride (HBFM) du moyen de traitement de signal;
- les signaux de réception traités numériquement sont convertis en des signaux de réception analogiques et amenés à un réseau de réception analogique;
- les signaux analogiques de chacune des unités d'émission-réception (TRM) sont combinés les uns avec les autres dans un signal de sortie par le réseau de réception analogique.
